(19) Europäisches Patentamt
European Patent Office
Office européen des brevets

(11) **EP 4 009 034 A1**

(12) **EUROPEAN PATENT APPLICATION**

(43) Date of publication:
**08.06.2022 Bulletin 2022/23**

(21) Application number: **21212050.5**

(22) Date of filing: **02.12.2021**

(51) International Patent Classification (IPC):
**G01N 21/03** (2006.01)    **G01N 21/17** (2006.01)

(52) Cooperative Patent Classification (CPC):
**G01N 21/1702; G01N 21/031;** G01N 2021/1704

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2020 ES 202031211**

(71) Applicant: **Technische Universität Dortmund
44227 Dortmund (DE)**

(72) Inventors:
• **ORTIZ PEREZ, Alvaro**
  **44139 Dortmund (DE)**
• **RODRIGUEZ GUTIERREZ, Gabriel**
  **44379 Dortmund (DE)**
• **Prof. Dr. PALZER, Stefan**
  **44227 Dortmund (DE)**

(74) Representative: **Michalski Hüttermann & Partner
Patentanwälte mbB
Kaistraße 16A
40221 Düsseldorf (DE)**

(54) **PHOTOACOUSTIC SENSOR**

(57)    The present invention is directed to a detector that allows for both detection and quantification of the concentration of a certain gas in an environment, by means of the photoacoustic effect.

In addition, this invention is directed to a method for manufacturing a detector such as the one mentioned above, as well as a method for measuring the concentration of a certain gas in an environment using the aforementioned detector.

FIG. 2

EP 4 009 034 A1

**Description**

**OBJECT OF THE INVENTION**

The present invention is directed to a detector that allows for both detection and quantification of the concentration of a certain gas in an environment, by means of the photoacoustic effect.

In addition, this invention is directed to a method for manufacturing a detector such as the one mentioned above, as well as a method for measuring the concentration of a certain gas in an environment using the aforementioned detector.

**BACKGROUND OF THE INVENTION**

Sensors that allow for detection of a certain gas in an environment are currently in use in multiple applications. For example, sensors exist that allow for detection of the gas $NO_2$ for the purpose of monitoring contamination of an environment, or the detection of CO and $NO_2$ for the purpose of early detection of a possible fire.

These sensors, which are already known, are based on spectroscopy, or they are sensors of solid or electrochemical states. This allows for the differentiation of 4 basic types of sensors, which are metal oxide-based sensors, electrochemical cells, non-dispersive absorption spectroscopy and laser absorption spectroscopy.

Metal oxide-based gas sensors are prone to long-term cross-sensitivity, as well as poor reproducibility and deviations.

Meanwhile, electrochemical cells have a limited shelf life and are sensitive to humidity and other gases than the gas to be detected, so they can be easily tainted.

With regard to non-dispersive absorption and laser absorption spectroscopy sensors, both require a long optical path to achieve the detection of gases in low concentrations.

Therefore, the sensors that are currently available that allow for detection are complex and low-efficiency for the quantification of the concentration of a gas in an environment.

**DESCRIPTION OF THE INVENTION**

The present invention proposes a solution to the above problems by means of a detector configured to detect and quantify the concentration of a gas in an environment in accordance with claim 1, a manufacturing method for this detector in accordance with claim 11, and a method for measuring the concentration of a gas in an environment, in accordance with claim 15. In the dependent claims, preferred manifestations of the invention are defined.

The first inventive step provides a detector configured to detect and quantify the concentration of a gas in an environment, consisting of:

- a multiple-reflection cell that consists of:

    o a chamber configured to contain the gas,
    o an entrance for the gas to enter the chamber,
    o means of emitting light, where the emission of light into the gas occurs in the chamber, with the means of emitting light located in the chamber,

- at least one acoustic resonator, where at least one portion of the at least one acoustic resonator is in communication with the chamber of the multiple-reflection cell,
- means of detection of signals, and
- means of analysis configured to analyze the signals detected by the means of detection, where the means of analysis are configured to determine the concentration of gas $C_{GAS}$ in the chamber of the multiple-reflection cell based on the signals detected by these means of detection.

Throughout this document, a/the "gas" will be understood to refer to a gas with a specific formulation that is contained in an environment as part of a mixture of gases and whose presence is desired to be detected, and its concentration in this mixture of different gases is desired to be determined.

Gases such as NO2, S02, O3, H2S, CH4, CO or CO2 are examples of gases that may be found in an environment and that, for various reasons, there is reason to detect and monitor for the purpose of identifying possible problems or risk situations, such as contamination or flammable or explosive environments.

Thus, gases such as those indicated above are contained in a mixture of gases that makes up an environment, a quantity of which is introduced into the chamber of the multiple-reflection cell, where light emission occurs, by means of one of the means of light emission also contained in this chamber; thus, the light source is in direct contact with the mixture of gases to be analyzed.

In one specific manifestation, the chamber of the multiple-reflection cell is an open chamber.

In one specific manifestation, the multiple-reflection cell is annular in shape.

The light emitted by the means of light emission reacts with the gas to be detected, so that this emitted light is absorbed by the gas in a specific wavelength range, determined by the composition of the gas to be detected. This absorption generates photoacoustic signals, whose intensity $I_{PA}$ depends on the intensity of the light emitted $I_{light}$ and the number of particles of gas that absorb the light emitted by the means of light emission.

Thus, the detector is based on the photoacoustic effect generated in the chamber of the multiple-reflection cell for the detection of the gas in the mixture, as well as the determination of the concentration of this gas.

The chamber of the multiple-reflection cell permits, advantageously, for improvement of the power of the light emitted by the means of light emission and thus improvement of the generation of photoacoustic signal.

The detector also includes at least one resonator, which extends longitudinally in an X-X' direction, defining a first and second end of this resonator. This resonator is characterized by a resonance frequency ωRES, and by a bandwidth value BW.

This resonance frequency $\omega_{RES}$ of the resonator is defined by the size of this resonator, and by the sound velocity of the gas to be detected, which in turn depends on the composition of the gas itself and its temperature, $T_{gas}$.

The resonator collects the photoacoustic signal generated in the chamber of the multiple-reflection cell by signal coupling. That is, any point of the resonator that allows for coupling of the photoacoustic signal generated in the chamber of this resonator collects this signal. This coupling occurs when the maximums and minimums available in the stationary wave of the resonator coincide with the photoacoustic signal generated.

Thus, the resonator may have a portion of its length located within the chamber, with a portion of this resonator always existing in communication with the chamber, and this portion may be located fully or partially within the chamber, so that there exists at least one point that allows for coupling with the photoacoustic signal.

In one specific manifestation, multiple points on the resonator are located inside the chamber, and they receive the photoacoustic signal.

In one specific manifestation, the at least one acoustic resonator consists of a first end and a second end, with the at least one acoustic resonator extending between the first and second ends in a longitudinal direction X-X'.

In addition, the at least one portion in communication with the chamber is located between the first end and the second end.

In one specific manifestation, the at least one portion of the at least one acoustic resonator is housed inside the chamber.

Advantageously, this allows for better communication with this chamber between the points on the resonator that are housed inside it, thus directly collecting the signals generated.

In one specific manifestation, at least the first end of the acoustic resonator is housed inside the chamber. This allows more precise positioning of the acoustic resonator in relation to the chamber.

The at least one resonator allows, advantageously, for the reduction of noise and improvement of the defined acoustic frequencies when the photoacoustic signal is generated.

In addition, the detector includes means of signal detection, particularly for the photoacoustic signals generated in the multiple-reflection cell and transmitted by the resonator.

These signals, detected by the means of signal detection, are analyzed by multiple means of analysis, which allow extraction of information on the detected signals, in particular, information related to environmental parameters, determining the concentration of the gas to be analyzed based on these parameters, such as temperature or pressure.

In one specific manifestation, the signals are acoustic signals, detected by the pressure generated by these signals, or through the temperature variations that these acoustic signals generate in the environment by means of the variation of pressure generated in this environment.

That is, the bandwidth (BW) of the resonator allows for measurement of different points of the signals detected by the means of detection, along a determined frequency range.

Thus, it is possible to obtain a curve, using these measurements at those points where the modulation frequency of the means of light emission, and thus of the signal obtained, coincides with the resonance frequency. This curve, by means of its characteristic parameters such as amplitude, bandwidth, central frequency or total area under the curve, reflects the concentration of gas present in the chamber.

Thus, it is possible to obtain a curve, preferably a Lorenz curve, representing the concentration of the gas to be analyzed as a function of the indicated environmental parameters.

In one specific manifestation, the concentration of the gas to be analyzed is obtained by measuring the amplitude and the area of the complete curve, which represents the function obtained by means of measuring the resonance of the signals detected by the means of detection in the resonator in a determined frequency range.

In one specific manifestation, the means of detection are calibrated for the detection of signals generated in the chamber.

Advantageously, the present detector increases in sensitivity as the intensity of the light emitted by the means of light emission increases, so it allows for highly selective detection. In addition, the simplicity of the configuration of the present detector allows for both simplification of its manufacture and reduction of its size.

In addition, and advantageously, obtaining the curve and thus measuring the area under this curve for the determination of the concentration of the gas to be analyzed allows for precise, stable determination of this concentration.

In one specific manifestation, the construction of the curve can be achieved by means of a unique modulation frequency of the means of light emission, and therefore by means of the detection of the signals generated by these means of light emission in the chamber, and received in the resonator, completing the defined function, and thus the generated curve, by means of additional means of detection, which measure the variation in temperature or humidity in the environment, modified by the generated signal.

In one specific manifestation, the device consists of two or three resonators, connected to one another, in such a way that the signal detected by the means of detection that are present in the different resonators are attached to those resonators, obtaining measurements of this signal in complementary frequencies that help construct the curve.

In one specific manifestation, the means of light emission are configured to emit UV light.

Advantageously, the emission of UV light allows for detection of gases such as $NO_2$, $SO_2$, $O_3$ or $H_2S$, which absorb light at wavelengths within the ultraviolet range.

In one specific manifestation, the means of detection are configured to detect temperature, sound and/or pressure. That is, the means of detection can detect the photoacoustic signals originating from the chamber of the multiple-reflection cell, thus distinguishing between sound or pressure of the signal received.

In one specific manifestation, the means of detection are also capable of detecting the temperature of the gas inside the chamber, which allows for determination of the concentration of this gas. In particular, the signal detected undergoes variation in its velocity based on the temperature and composition of the gas to be detected, which allows increased information to be received based on the resonance of the signal generated in the resonator.

In one specific manifestation, the means of signal detection are configured to detect photoacoustic signals of intensity $I_{FA}$ and frequency $\omega_{FA}$. These parameters define the photoacoustic signal generated after the absorption of the light emitted by the particles of the gas, and therefore, based on the concentration of the gas to be detected inside the chamber, so the detection and analysis of these photoacoustic signals allow for the determination of the concentration of the gas.

In one specific manifestation, the detector consists of a body that contains the multiple-reflection cell and the at least one acoustic resonator. Advantageously, this body may be manufactured in an integral manner in a single piece, thus facilitating the production process, as well as the dimensions of the detector.

Thus, the configuration of the detector with an integral body allows for this detector to be miniaturized, reducing its dimensions without losing sensitivity in the detection of the gas.

In one specific manifestation, the body includes a housing designed to house the means of light emission. Thus, when the means of light emission are inside the housing, the light source is in direct contact with the gas to be analyzed.

In one specific manifestation, the means of light emission are modulated in intensity $I_{light}$ with a frequency $\omega_{light}$.

That is, the modulation of the frequency $\omega_{light}$ allows for excitement of the photoacoustic signal generated when the light emitted affects the particles of the gas to be analyzed. This result may also be obtained by means of modification of the path of the rays of light emitted by the means of light emission. Thus, when the frequency $\omega_{light}$ coincides with some of the lines of absorption of the gas to be detected, the light emitted transmits energy in the form of heat, which involves an increase in temperature in the environment of the generated signal and, as a result, a local increase in pressure. This therefore allows the detector to obtain a photoacoustic signal at the frequency $\omega_{light}$, detected in the resonator, with which the curve of the gas to be analyzed is obtained.

In one specific manifestation, this increase in temperature is detected by means of detection, such as a temperature sensor, which provides additional information for the construction of the curve of the gas to be analyzed.

In one specific manifestation, the light emitted is modulated at a frequency equal to the resonance frequency $\omega_{RES}$ of the at least one acoustic resonator.

Using the bandwidth of the resonator, previously defined, and the resonance frequency $\omega_{RES}$, it is possible to perform a scan of the modulation frequency of the light emitted by the light mechanisms, for the purpose of analyzing the response of the signals detected by the means of detection.

In one specific manifestation, the value of the frequencies of the photoacoustic signal and the frequency of the light emitted coincide, i.e., $\omega_{FA} = \omega_{light}$.

That is, in these conditions, the photoacoustic amplitude is greatest, which advantageously means that the signal to be detected by the means of detection, specifically a microphone, is at its maximum potential, which facilitates detection. In addition, the resonator acts as a filter for environmental noise, eliminating the different signals that are outside the bandwidth (BW) of this resonator.

In one specific manifestation, the intensity of the photoacoustic signal $I_{FA}$ is proportional to the concentration of the gas to be analyzed $C_{GAS}$ in the multiple-reflection cell.

In particular, each molecule of the gas to be analyzed that absorbs part of the light emitted by the means of light emission contributes to the photoacoustic signal generated in the chamber, and detected by the means of detection with the intervention of the resonator.

In one specific manifestation, the relationship between the photoacoustic signal, s, to the concentration of the gas to be analyzed $C_{GAS}$ in the multiple-reflection cell is linear; i.e., with the number density, n, and with the intensity of the light emitted $I_{light}$ as follows:

$$s(n, P0) = Cn\sigma_{p,T}P_0$$

where Po represents the optical potency, and where $\sigma_{\rho,T}$ represents the absorption, with C being a specific constant of the system and n being the number density.

The photoacoustic signal, s, is the amplitude of the sound generated by the light emitted according to the intensity of the light emitted Ilight, when this light is absorbed by the gas to be analyzed.

In one specific manifestation, the means of light emission include at least one LED.

In a second inventive step, the invention provides a manufacturing method for a detector in accordance with the first inventive step, characterized by a method consisting of the following stages:

a) manufacturing, in its entirety, a body that includes a multiple-reflection cell with a chamber and an entry for gas, and at least one acoustic resonator, with at least one portion of the at least one acoustic resonator inside the chamber,

b) machining a housing designed to house multiple means of light emission,

c) incorporating the means of light emission into the housing,

d) incorporating multiple means of signal detection adjacent to the chamber and multiple means of analysis on the exterior of the body.

Advantageously, this method allows for a detector that is partly configured in a single integral piece, thus simplifying the manufacturing process, reducing the costs as well as the dimensions of the detector obtained.

The present procedure allows for a single piece, the body, into which a slot is machined in order to house the means of light emission, and upon which the means of detection of the signals transmitted are located, by means of at least one resonator.

In one specific manifestation, stage b) of the method in accordance with the second inventive step includes machining the housing in the acoustic resonator.

In one specific manifestation, stage a) includes manufacturing two acoustic resonators, with their first ends inside the chamber and aligned in a longitudinal direction X-X".

In a third inventive step, the invention provides a method for measuring the concentration of a gas ($C_{GAS}$) in an environment, such as NO2, SO2, O3 or H2S using a detector in accordance with the first inventive step, with the method consisting of the following stages:

a) introducing a mixture of gases into the chamber via the entry,

b) emitting light using the means of light emission, affecting the gas that is inside the chamber,

c) receiving signals in the means of detection, and

d) determining the concentration of gas ($C_{GAS}$) by analysis with the means of analysis of the signals received by the means of detection.

All of the characteristics and/or stages of method described in this report (including the claims, description and drawings) may be combined in any combination, except for combinations of mutually exclusive characteristics.

## DESCRIPTION OF THE DRAWINGS

These and other characteristics and advantages of the invention are made clearer using the detailed description that follows from a preferred form of manifestation, provided only for illustrative purposes, not limited to the following, with references to the accompanying figures.

Figure 1    In this figure, a schematic shows a first example of a manifestation of a detector in accordance with the invention.

Figure 2    In this figure, a perspective view of a second example of a manifestation of a detector in accordance with the invention is shown.

Figure 3    In this figure, an elevation of the second example of the manifestation shown in Figure 2 is provided.

Figure 4    In this figure, a detail view of the interior of the second example of the manifestation shown in Figure 2 is shown.

## DETAILED EXPLANATION OF THE INVENTION

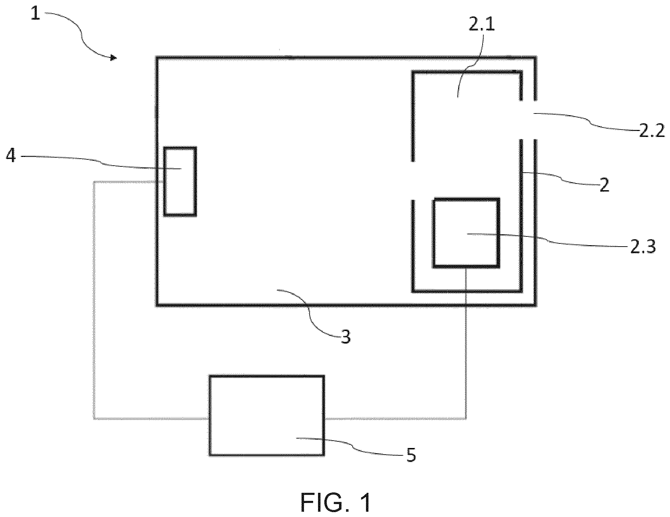

Figure 1 shows, in a schematic using a sketch map, a first example of a manifestation of a detector (1) and its preferred configuration.

As observed, the detector (1) has a multiple-reflection cell (2), which delimits a chamber (2.1) that is open on two sides. This chamber (2.1) houses multiple means of light emission (2.3).

One of these openings in the chamber (2.1), located on the right side of the figure, corresponds to an entry (2.2) to the chamber (2.1), specifically an entry (2.2) by which a fluid to be analyzed, in particular a gas formed by a mixture of different gases, can enter the chamber (2.1) of the multiple-reflection cell (2).

The other opening of the chamber (2.1), located in this case on the left side of the figure, allows for the output of the signals generated in the chamber (2.1), in particular, photoacoustic signals.

The signals, by means of the opening in the chamber (2.1), access the resonator (3), where the means of signal detection are located (4), which allow for their detection. This opening provides an acoustic coupling between the chamber (2.1) and this resonator (3).

As observed, the photoacoustic signals travel a trajectory along the space defined by the resonator (3) until they reach the means of signal detection (4), which are positioned in a belly or antinode of this resonator (3).

On the other hand, the means of analysis (5), in particular a microcontroller or a computer, allow for analysis of the signals detected by the means of signal detection (4).

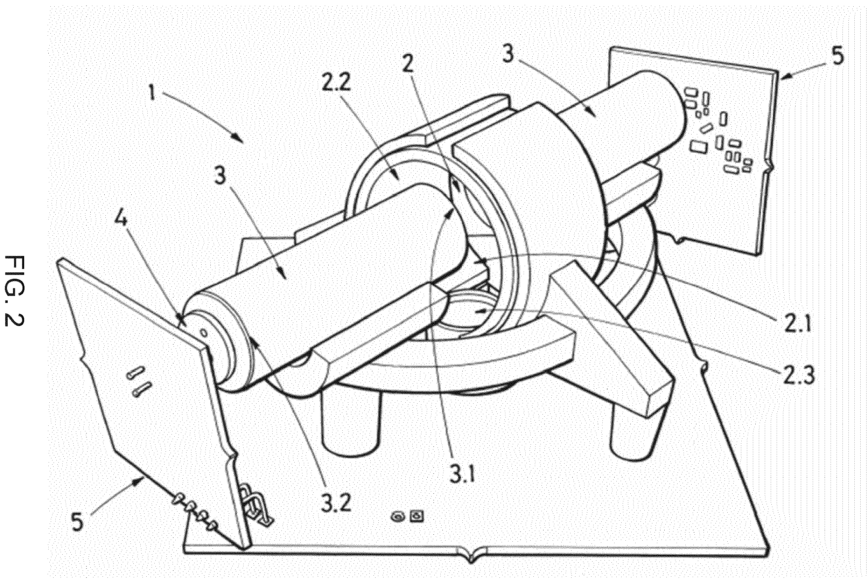

Figure 2 shows a perspective view of a second example of a manifestation of a detector (1) for the detection and quantification of the concentration of a gas in an environment in accordance with the invention, with this detector mounted and in operating position.

A multiple-reflection cell (2) can be seen in the present figure, in the form of an annular piece open on both ends, defining a chamber (2.1) in its interior, through which it is possible to introduce a mixture of gases into it. This mixture of gases is introduced into the chamber (2.1) through the entry (2.2), in the form of an opening in one side of this chamber (2.1).

In the lower part of the chamber (2.1), as it is shown in Figure 2, and inside it, there are multiple means of light emission (2.3), in particular an LED that emits the wavelengths corresponding to UV light.

In addition, the multiple-reflection cell (2) has an annular structure around it, as well as some prolongations of this structure, which allow for greater stability in the support of the cell (2) on a surface.

This structure also has multiple supports, upon which two acoustic resonators (3) are located, which are partially housed inside the chamber (2.1).

In particular, the acoustic resonators (3) extend in a longitudinal direction X-X', with both aligned with the two sides of the chamber (2.1) of the multiple-reflection cell (2).

These acoustic resonators (3) have a first end (3.1) and a second end (3.2), with the first end (3.1) of both acoustic resonators (3) being housed inside the chamber (2.1), as well as a portion of the length of each acoustic resonator (3).

On the other hand, the second end (3.2) of the two acoustic resonators (3) is attached to multiple means of detection (4), in this case multiple microphones (4), which receive the acoustic signals generated inside the chamber (2.1), generated when the means of light emission (2.3) emit UV light, which is absorbed by the gas to be analyzed inside the chamber (2.1).

The microphones (4) are, in turn, connected to multiple means of analysis (5) of the acoustic signals detected, allowing these means of analysis (5) to obtain, using the signals, the concentration of the gas in question inside the chamber (2.1)

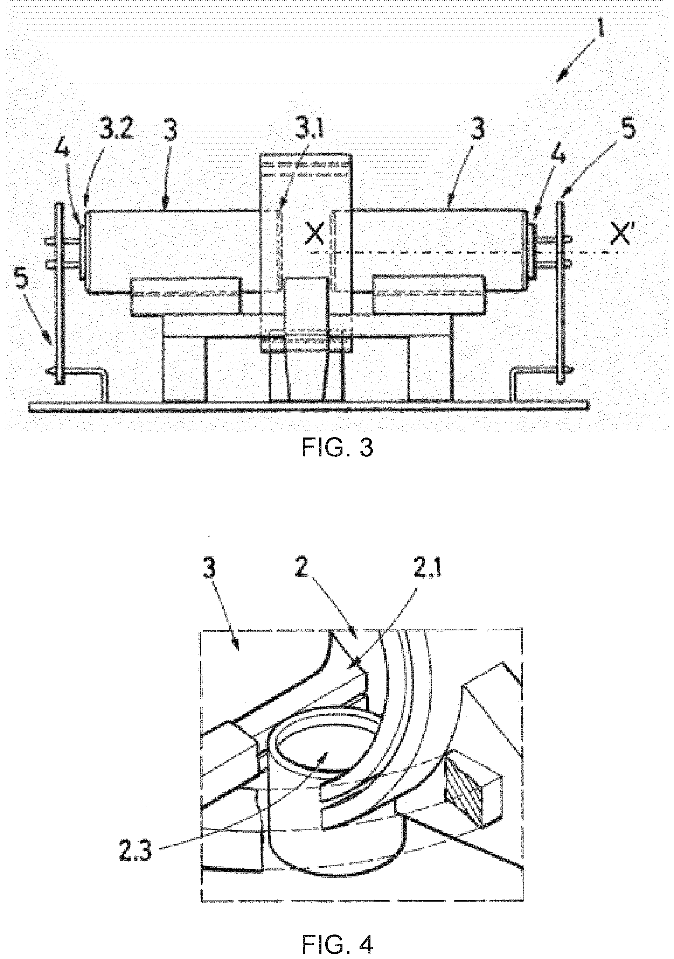

Figure 4 shows a detailed view of the interior of the detector (1) shown in Figure 2, in particular the layout of the means of emission (2.3) of UV light inside the chamber (2.1)

As observed, the multiple-reflection cell (2) houses inside its chamber (2.1) an LED (2.3), which allows for emission of UV light inside this chamber (2.1) to be absorbed by the gas contained within the multiple-reflection cell (2).

In addition, the portion of the resonator (3) housed inside the chamber (2.1) is shown, in particular, the first end of this resonator (3).

This layout can also be observed in Figure 3, which represents an elevation of the detector (1) shown in Figure 2.

As shown, the multiple-reflection cell (2), in a ring shape, delimits the chamber (2.1), in which two resonators (3) are housed, in particular the first end (3.1) of each of these resonators (3), which are supported on an element of the detector (1) and partially inside this chamber (2.1) so that its orientation is perpendicular to the plane defined by the multiple-reflection cell (2).

Figure 3 also shows the connection, by means of the second end (3.2) of each resonator (3) with the microphones (4), which in turn are connected to the means of analysis (5), attached to the support plate of the detector (1).

**Claims**

1. Detector (1) configured to detect and quantify the concentration of a gas in an environment, **characterized by** consisting of:

   - a multiple-reflection cell (2) that consists of:

     o a chamber (2.1) configured to contain the gas,
     o an entrance (2.2) for the gas to enter the chamber (2.1),
     o means of emitting light (2.3), where the emission of light occurs in the chamber (2.1) into the gas,
     with the means of emitting light (2.3) located in the chamber (2.1),

   - at least one acoustic resonator (3),
   where at least one portion of the at least one acoustic resonator (3) is in communication with the chamber (2.1) of the multiple-reflection cell (2),
   - means of detection (4) of signals, and
   - means of analysis (5) configured to analyze the signals detected by the means of detection (4), where the means of analysis (5) are configured to determine the concentration of gas ($C_{GAS}$) in the chamber (2.1) of the multiple-reflection cell (2) based on the signals detected by these means of detection (4).

2. Detector (1) in accordance with the above claim, **characterized by**:

   - at least one acoustic resonator (3) consisting of a first end (3.1) and a second end (3.2), with the at least one acoustic resonator (3) extending between the first (3.1) and second (3.2) ends in a longitudinal direction X-X', and
   - that the at least one portion in communication with the chamber (2.1) is located between the first end (3.1) and the second end (3.2).

**3.** Detector (1) in accordance with the above claims, **characterized by** having the at least one portion of the at least one acoustic resonator (3) located inside the chamber (2.1).

**4.** Detector (1) in accordance with either claim 2 or 3, **characterized by** having at least the first end (3.1) of acoustic resonator (3) located inside the chamber (2.1).

**5.** Detector (1) in accordance with any of the above claims, **characterized by** the means of light emission (2.3) being configured to emit UV light.

**6.** Detector (1) in accordance with any of the above claims, **characterized by** the means of detection (4) being configured to detect temperature, sound and/or pressure.

**7.** Detector (1) in accordance with any of the above claims, **characterized by** the means of signal detection (4) being configured to detect photoacoustic signals of intensity $I_{PA}$ and frequency $\omega_{PA}$.

**8.** Detector (1) in accordance with any of the above claims, **characterized by** consisting of a body that contains the multiple-reflection cell (2) and the at least one acoustic resonator (3).

**9.** Detector (1) in accordance with the previous claim, **characterized by** the body consisting of a housing designed to house the means of light emission (2.3).

**10.** Detector (1) in accordance with any of the above claims, **characterized by** the means of light emission (2.3) being modulated in intensity $I_{light}$ with a frequency $\omega_{light}$.

**11.** Detector (1) in accordance with the previous claim, **characterized by** the light emitted being modulated to a frequency equal to the resonance frequency $\omega_{RES}$ of the at least one acoustic resonator (3).

**12.** Detector (1) in accordance with any of the above claims, where $\omega_{PA} = \omega_{light}$.

**13.** Detector (1) in accordance with any of the above claims, where $I_{FA}$ is proportional to $C_{GAS}$ in the multiple-reflection cell (2).

**14.** Detector (1) in accordance with any of the above claims, **characterized by** the means of light emission (2.3) including at least one LED.

**15.** Manufacturing method for a detector (1) in accordance with any of the above claims 1 through 14, with the method consisting of the following stages:

a) manufacturing, in its entirety, a body that includes a multiple-reflection cell (2) with a chamber (2.1) and an entry for gas (2.2), and at least one acoustic resonator (3), with at least one portion of the at least one acoustic resonator (3) inside the chamber (2.1),
b) machining a housing designed to house multiple means of light emission (2.3),
c) incorporating the means of light emission (2.3) into the housing,
d) incorporating multiple means of signal detection (4) adjacent to the chamber (2.1) and multiple means of analysis (5) on the exterior of the body.

**16.** Manufacturing method for a detector (1) in accordance with claim 15, with stage b) including machining the housing in the acoustic resonator (3).

**17.** Manufacturing method for a detector (1) in accordance with either claim 15 or 16, **characterized by** stage a) including manufacturing the acoustic resonators (3), with their first ends (3.1) inside the chamber (2.1) and aligned in the longitudinal direction X-X'.

**18.** Means of measuring the concentration of a gas ($C_{GAS}$) in an environment, such as $NO_2$, $SO_2$, $O_3$ or $H_2S$ using a detector (1) in accordance with any of the claims 1 through 14, with the method consisting of the following stages:

a) introducing a mixture of gases into the chamber (2.1) via the entry (2.2),
b) emitting light using the means of light emission (2.3), affecting the gas that is inside the chamber (2.1),
c) receiving signals in the means of detection (4), and
d) determining the concentration of gas ($C_{GAS}$) by analysis with the means of analysis (5) of the signals received by the means of detection (4).

FIG. 1

FIG. 2

FIG. 3

FIG. 4

Europäisches
Patentamt

European
Patent Office

Office européen
des brevets

# EUROPEAN SEARCH REPORT

**Application Number**

EP 21 21 2050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 534 129 B2 (MIKLOS ANDRAS [DE]; ANGSTER JUDIT [DE]; FRAUNHOFER GES FORSCHUNG [DE]) 17 September 2013 (2013-09-17) * abstract; figures 1-2 * * column 1, lines 24-31 * * column 2, lines 42-49 * * column 3, line 29 - column 4, line 23 * * column 4, line 63 - column 5, line 49 * ----- | 1-18 | INV. G01N21/03 G01N21/17 |
| A | US 10 712 259 B2 (PAJ SENSOR AS [DK]) 14 July 2020 (2020-07-14) * abstract; figures 1-3 * * column 8, lines 13-55 * * column 9, line 31 - column 10, line 19 * * column 12, lines 36-51 * ----- | 1-18 | |
| A | WO 2006/114766 A2 (KONINKL PHILIPS ELECTRONICS NV [NL]; VAN KESTEREN HANS [FR] ET AL.) 2 November 2006 (2006-11-02) * abstract; figure 1 * * page 4, line 31 - page 6, line 27 * ----- | 1-18 | |

**TECHNICAL FIELDS SEARCHED (IPC)**

G01N

The present search report has been drawn up for all claims

| Place of search | Date of completion of the search | Examiner |
|---|---|---|
| Munich | 4 April 2022 | Passier, Martinus |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

.................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 21 21 2050

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2022

| Patent document cited in search report | | Publication date | Patent family member(s) | | Publication date |
|---|---|---|---|---|---|
| US 8534129 | B2 | 17-09-2013 | DE 102007014518 | B3 | 13-11-2008 |
| | | | EP 2130026 | A1 | 09-12-2009 |
| | | | US 2010107733 | A1 | 06-05-2010 |
| | | | WO 2008116658 | A1 | 02-10-2008 |
| US 10712259 | B2 | 14-07-2020 | EP 3254088 | A1 | 13-12-2017 |
| | | | US 2018024046 | A1 | 25-01-2018 |
| | | | WO 2016124545 | A1 | 11-08-2016 |
| WO 2006114766 | A2 | 02-11-2006 | CN 101163956 | A | 16-04-2008 |
| | | | EP 1883803 | A2 | 06-02-2008 |
| | | | JP 5060469 | B2 | 31-10-2012 |
| | | | JP 2008539416 | A | 13-11-2008 |
| | | | US 2009128819 | A1 | 21-05-2009 |
| | | | WO 2006114766 | A2 | 02-11-2006 |

EPO FORM P0459

For more details about this annex : see Official Journal of the European Patent Office, No. 12/82